# EUROPEAN PATENT APPLICATION

(11) **EP 2 790 100 A1**
(43) Date of publication of application: **15.10.2014**
(21) Application number: 12871073.8
(22) Date of filing: 20.06.2012
(51) Int. Cl.: G06F 9/44, H04L 29/06

(54) **VERSION CONSTRUCTION SYSTEM AND METHOD**

(30) Priority: 12.03.2012 CN 201210063527
(71) Applicant: ZTE Corporation, Shenzhen, Guangdong 518057 (CN)
(72) Inventor: LI, Tao, Shenzhen Guangdong 518057 (CN)
(74) Representative: Protector IP Consultants AS
(86) International application number: PCT/CN2012/077219
(87) International publication number: WO 2013/135016

(57) **Abstract**

A version construction system and method are disclosed. The system includes: a master control server, configured to: generate a control command according to an obtained request, correspondingly send the control command to a version construction server, and generate receipt information according to construction information reported by the version construction server, wherein the control command comprises a version construction command; the version construction server connected to the master control server, configured to: send the version construction command or complete flow command from the master control server to version construction machines, and report construction information fed back by the version construction machines to the master control server; and the version construction machines connected to the version construction server, configured to: construct software and hardware versions according to the version construction command or the complete flow command received from the version construction server, and feed back construction information to the version construction server. The above version construction system and method are beneficial to improve efficiency and shorten the development cycle.

## Description

### Technical Field

The present document relates to the fields of wireless communication and computer, and particularly, to a version construction system and method.

### Background of the Related Art

At present, with the improvement of technology and the continuous development of informatization, computer software has been an indispensable tool in people's lives. In the field of communication, equipment manufacturers produce and manufacture equipment for the users and provide corresponding support software. In the field of computer, software and hardware corporations produce and manufacture numerous software and hardware products for the users. With the diversification of the products and the increasing number of the software and hardware versions, the people have increasingly higher requirements on the product quality. In the field of product research and development, it seems that furthest shortening the research and development cycle, improving the product quality, and strengthening the speed of responding to the market, are extremely important.

Generally, in the field of product research and development, it may be required to cope with multiple demand programs simultaneously, and there will be more than one output.

The software and hardware release version is taken as an example, it may need to simultaneously release the software and hardware versions of a plurality of programs that certain moment, or it may need to release a certain or plurality of software and hardware versions within a certain time period and to guarantee that the functions can be normally used. A common way is that the version producer makes a related version, if the self-testing has no problem at first, the submission flow is performed, and then the tester tests the version again, thus this process may take a couple of days. The research personnel cannot fully master the version condition within these days, meanwhile other versions released within these days also may inherit the fault of the previous version, which causes the time extension of version delivery and the uncontrollability of version quality, and costs a lot on the disposition with regard to the concurrent versions at the same time.

With regard to a situation that the personnel construct the software and hardware versions remotely, generally the local related personnel are required to carry out the execution, and thus additional expense of time and energy will be generated in communication and understanding and data information transmission.

Based on the dual considerations of costs and subscriber use of the software and hardware versions, it is urgent to solve the following technical problems:
1. How to compress the version construction time, rapidly process the concurrent version construction demand, and support the all-weather global version construction demand.
2. How to furthest enhance the quality and stability of the constructed version.

In addition, with the diversification of the products and the increasing number of the software and hardware versions, the people have increasingly higher requirements on the product quality. More and more high-end users and groups also appear, and they have their own knowledge of the software and hardware products, and giving the high-end users and groups a chance of self-realizing the software and hardware versions will further deepen their knowledge of the quality and performance of the software and hardware products of the corporations in most cases. In such an era that always emphasizes on "Do It Yourself (DIY)" nowadays, the software and hardware products also move toward the "DIY". To furthest allow the users to control the software and hardware products by themselves and to add their own elements will contribute to the sale of the software and hardware products and to the acquisition of maximum support and understanding from the users.

However, the base of the number of users is huge, and the traditional version construction way and flow cannot meet the demand of the user group with such a huge base. All the version constructions are generally small-scale and singular in the traditional research and development field, and the purpose thereof is to promptly and accurately construct versions to be tested. Moreover, with regard to the high-end users and groups, when they use tools or interface functions provided to carry out the secondary development on the software through their own understanding and knowledge, the requirement for the version construction is to promptly construct software versions bearing their "DIY" ideas. The number of these users is always large, it may be concurrent with a large amount of version construction requests at the same time, and with regard to the users, all the version constructions are basically completed through the network in a way of long-distance construction.

Therefore, how to more widely and fully use the existing software and hardware to carry out the secondary development is another problem required to be solved urgently.

### Summary of the Invention

The embodiments of the present document provide a version construction system and method, to solve the problem that the existing version construction time is long.

The embodiment of the present document provides a version construction system, which comprises: a master control server, a version construction server connected to the master control server, and version construction machines connected to the version construction server, wherein:
the master control server is configured to: generate a control command according to an obtained request, correspondingly send the control command to the version construction server, and generate receipt information according to construction information reported by the version construction server, wherein the control command comprises a version construction command;
the version construction server is configured to: send the version construction command or a complete flow command from the master control server to the version construction machines, and report construction information fed back by the version construction machines to the master control server; and
the version construction machines are configured to: construct software and hardware versions according to the version construction command or the complete flow command received from the version construction server, and feed back the construction information to the version construction server.

Preferably, the control command further comprises a version test command, the system further comprises a version test server connected to the master control server and test machines connected to the version test server; wherein:
the master control server is further configured to: correspondingly send the version test command to the version test server, and generate receipt information according to test information reported by the version test server;
the version test server is configured to: send the version test command from the master control server to the test machines, and report test information fed back by the test machines to the master control server; and
the test machines are configured to: test software and hardware versions according to the version test command received from the version test server, and feed back the test information to the version test server.

Preferably, the control command further comprises a complete flow command; the master control server is further configured to: correspondingly send the complete flow command to the version construction server, and after receiving the construction information reported by the version construction server, send the version test command to the version test server.

Preferably, the control command further comprises a version submission command, and the master control server is further configured to: submit current software and hardware versions to a target path according to the version submission command.

Preferably, the master control server is configured to: generate the control command according to a request input locally or a received request input through a client or a received request sent through a terminal.

Preferably, the version construction machines comprise multi-system version construction machines; the version construction server is configured to: receive the version construction command sent by the master control server, allocate a version construction machine for the version construction command, and send the version construction command to a corresponding version construction machine.

Preferably, the test machines comprise multi-system test machines; the version test server is configured to: receive the version test command sent by the master control server, allocate a test machine for the version test command, and send the version test command to a corresponding test machine.

Preferably, the master control server comprises: a logic control module, an Internet-based control module and a short message-based control module, wherein:
the Internet-based control module is configured to: receive a user request or a service request input by a user through a client, and parse the user request or the service request to send to the logic control module, wherein, the service request comprises a secondary development service request;
the short message-based control module is configured to: receive a short message sent by the user through a terminal, and parse the short message to send to the logic control module; and
the logic control module is configured to: receive the user request input locally, a parse result sent by the Internet-based control module or a parse result sent by the short message-based control module, and generate the control command in real time or at regular time according to the parse result sent by the Internet-based control module, the parse result sent by the short message-based control module or the user request input locally.

Preferably, the logic control module is further configured to: allocate an identifier to the user request or the service request, and correspondingly save files uploaded by the user or the receipt information generated by the master control server according to the identifier.

The embodiment of the present document further provides a version construction method, which comprises:
a master control server generating a control command according to an input request; and
when the control command is a version construction command, the master control server sending the control command to a version construction server, receiving construction information reported by the version construction server according to the control command, and generating receipt information according to the construction information.

Preferably, the method further comprises:
when the control command is a version test command, the master control server sending the control command to a version test server, receiving test information reported by the version test server according to the control command, and generating receipt information according to the test information; or
when the control command is a complete flow command, the master control server sending the control command to the version construction server, and after receiving construction information reported by the version construction server according to the control command, sending the control command to the version test server, receiving test information reported by the version test server according to the control command, and generating receipt information according to the test information; or
when the control command is a version submission command, the master control server submitting current software and hardware versions to a target path according to the control command.

Preferably, the master control server generating a control command according to an input request comprises:
the master control server generating the control command according to a user request input locally or input remotely; or the master control server generating the control command according to a service request input remotely, wherein the service request comprises a secondary development service request.

The above version construction system and method are beneficial to improve efficiency, shorten the development cycle, and implement all-weather automatic version construction and automatic test service, which effectively guarantees the quality of the constructed version.

### Brief Description of Drawings

FIG. 1 is an overall structure diagram of the system for automatic construction and automatic test in the embodiment of the present document.
FIG. 2 is a flow diagram of the system for automatic construction and automatic test performing services according to the present document.
FIG. 3 is a flow diagram of the browser-based client performing services in the embodiment of the present document.
FIG. 4 is a flow diagram of the version construction server performing services in the embodiment of the present document.
FIG. 5 is a flow diagram of the version test server performing services in the embodiment of the present document.

### Preferred Embodiments of the Invention

The embodiments of the present document will be described in detail in combination with the accompanying drawings below. It should be noted that the embodiments in the present document and the characteristics in the embodiments can be optionally combined with each other in the condition of no conflict.

In the embodiment of the present document, through a deep analysis on the automatic construction and automatic test service, a system that can execute the automatic construction and automatic test is raised, and a software installation version with high quality can be obtained more conveniently and effectively based on the system. Meanwhile, it is guaranteed that all-weather automatic version construction and automatic test function can be implemented through the system of the present document whenever wherever as long as a need of version construction exists, which shortens the version construction cycle and personnel interaction cycle, and curtails the cost expenditure and improves the work efficiency at the same time.

The embodiment of the present document provides a version construction system, and the system includes a master control server, a version construction server connected to the master control server, and version construction machines connected to the version construction server, wherein:
the master control server is used to: generate a control command according to an obtained request, correspondingly send the control command to the version construction server, and generate receipt information according to construction information reported by the version construction server, wherein the control command comprises a version construction command;
the version construction server is used to: send the version construction command or a complete flow command from the master control server to the version construction machines, and report construction information fed back by the version construction machines to the master control server; and
the version construction machines are used to: construct software and hardware versions according to the version construction command or the complete flow command received from the version construction server, and feed back the construction information to the version construction server.

In addition, the control command also can include a version test command, the system also includes a version test server connected to the master control server and test machines connected to the version test server; the master control server is also used to: correspondingly send the version test command to the version test server, and generate receipt information according to test information reported by the version test server; the version test server is used to: send the version test command from the master control server to the test machines, and report test information fed back by the test machines to the master control server; and the test machines are used to: test software and hardware versions according to the version test command received from the version test server, and feed back the test information to the version test server.

Preferably, the control command also can include a complete flow command; the master control server is also used to: correspondingly send the complete flow command to the version construction server, and after receiving the construction information reported by the version construction server, send the version test command to the version test server.

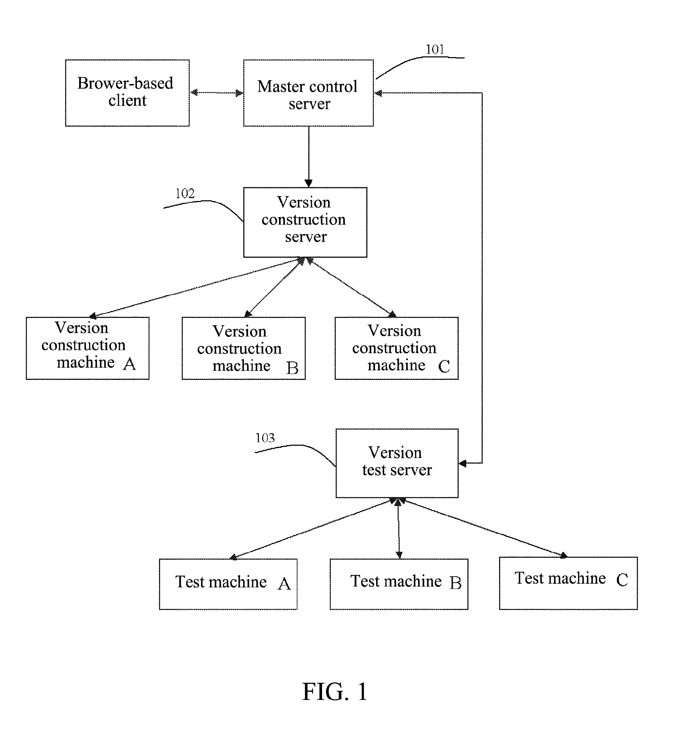

As shown in FIG. 1, it is an overall structure diagram of a system for automatic construction and automatic test in the embodiment of the present document, and the system includes a master control server 101, a version construction server 102 connected to the master control server 101 and a version test server 103 connected to the master control server 101, version construction machines connected to the version construction server 102 and test machines connected to the version test server 103, wherein:
the master control server is used to: generate a control command according to an obtained request, correspondingly send the control command to the version construction server and/or the version test server, and generate receipt information according to construction information reported by the version construction server or test information reported by the version test server, wherein the control command includes a complete flow command, a version construction command and a version test command;
the version construction server is used to: send the version construction command or the complete flow command from the master control server to the version construction machines, and report construction information fed back by the version construction machines to the master control server;
the version construction machines are used to: construct software and hardware versions according to the version construction command or the complete flow command received from the version construction server, and feed back the construction information to the version construction server;
the version test server is used to: send the version test command from the master control server to the test machines, and report test information fed back by the test machines to the master control server; and
the test machines are used to: test software and hardware versions according to the version test command received from the version test server, and feed back the test information to the version test server.

In addition, the control command also includes a version submission command, and the master control server is also used to: submit the current software and hardware versions to a target path according to the version submission command.

The above request includes a user request and a service request, the user request refers to a version construction request and a version test request and so on; and the service request refers to a secondary development service request and so on.

In the above system, the master control server is a device for general controlling the command response, sending and result feedback, the master control server generates specific control instructions by parsing a user request from the locality, the Internet and short messages, or it generates specific control instructions by parsing a service request from the Internet, and sends a command to the version construction server or the version test server according to these specific instructions. After the inferior version construction server or the version test server performs feedback, the master control server generates receipt information according to specific results to feed back to the user via the locality, the Internet and the short message control module.

The above master control server includes a logic control module, an Internet-based control module and a short message-based control module; a function of the Internet-based control module is to allow the user to perform control and information observation on the master control server through the Internet access; the user connects to the master control server via the Internet through a client with the login password control and sends a request to the master control server, and the master control server parses to carry out the related services after receiving the request. The user can observe process information and related LOG information in real time through the Internet client. A function of the short message-based control module is to allow the user to perform control and information observation on the master control server through a short message platform; the user sends a request to the numbers of the short message control module of the master control server through a cellphone short message, makes choices according to the short message reply of the short message module of the master control server, and then triggers the version construction service and the version test service; meanwhile the related result information and LOG information are sent to cell-phone numbers of the user through a short message. A function of the logic control module is to provide local real-time control and local editable asynchronous control, the real-time control allows the user to operate the master control server in real time, and real-time operations such as version construction and automatic test and so on can be performed; the editable asynchronous control allows the user to edit configuration files, set running scripts, and perform timing running, for example, the user can set to perform automatic construction and automatic test after work and submit the version and report simultaneously. The user can check the related schedule and related LOG information of each active task in real time.

Wherein, the master control server is specifically used to generate the control command according to the request input locally or the received request input through the client or the received request sent through the terminal. The above client can be a browser-based client, which allows the user to use the client to log in the master control server, the client has a login interface, and after an authorized user passing the identity check logs in the master control server, the user can establish and use the established user data to construct the version and upload related files. Meanwhile, the client is also a terminal for feeding back the results and versions of the remote master control server, the process results of the version construction and the related LOG files can be seen from the client, and the constructed versions on the master control server can be downloaded through the client.

The above version construction server is used to receive a version construction request of the master control server and concurrently process the related services of the version construction. When the version construction request of the master control server arrives, the version construction server parses out external information required by the version construction according to the related data of the request. The related data and files are established with respect to the construction of this time, a version construction machine is allocated to start the version construction process; and the latest version and related LOG generated by the version construction machine are received and put in appropriate data files and sent to the master control server.

The above version construction machines are a machine community and include multiple version construction machines. For various versions can be constructed simultaneously and some constructions monopolize certain resources of the system, the demand of concurrent constructions can be processed by preparing multiple machines. Meanwhile, this machine community includes machines of various systems such as windows system, mac system and linux system and so on, the object is to satisfy the requirement of multi-system version constructions. Each version construction machine is connected to the version construction server so that it can communicate with the version construction server and transfer the constructed versions and LOG information back in time.

The above version test server is used to receives an automatic test request of the master control server and concurrently process the related services of the automatic test. When the automatic test request of the master control server arrives, the version test server establishes the related data and files according to the request, allocates test machines, and starts an automatic test program to perform automatic testing. When the test is finished, automatic test reports and related LOG of the test machines are received and put into appropriate data files and sent to the master control server.

The above test machines are a machine community and include multiple test machines. The machine community includes a plurality of test machines of systems such as windows system, mac system and linux system and so on. The object is to satisfy the concurrent execution of multiple test tasks. Each test machine is connected to the version test server so that it can communicate with the version test server and transfer the automatic test reports and related LOG back in time.

With the above system, when software version construction and test are performed in the field of research and development and manufacturing, automatic version construction and automatic software test can be implemented, which shortens the development cycle; meanwhile, with regard to remote users, services based on the Internet also can be provided, and with regard to users without the Internet in inconvenient environment, services based on the short messages can be provided, which implements all-weather and all-regional support in terms of the construction of software versions and the assurance of version quality; and a quick response also can be made to the far-end demand and local demand, which saves the costs of personnel interaction and communication and increases productivity and product quality. In the above system, with regard to the high-end users and high-end user groups, they can perform customized development and extension on the software according to their own hobbies, and meanwhile they also can log in the master control server through authorization, so as to complete the process of converting the user defined software from the file to the software version.

The embodiment of the present document also provides a method for constructing and testing software and hardware versions, and the method includes the following steps.

In step 1, a master control server generates a control command according to an input request;

The step can include: the master control server generating the control command according to a user request input locally or input remotely; or the master control server generating the control command according to a service request input remotely, wherein the service request includes a secondary development service request.

In step 2, when the control command is a version construction command, the master control server sends the control command to a version construction server, receives construction information reported by the version construction server according to the control command, and generates receipt information according to the construction information.

In addition, the method also can include: when the control command is a version test command, the master control server sending the control command to a version test server, receiving test information reported by the version test server according to the control command, and generating receipt information according to the test information; or when the control command is a complete flow command, the master control server sending the control command to the version construction server, and after receiving construction information reported by the version construction server according to the control command, sending the control command to the version test server, receiving test information reported by the version test server according to the control command, and generating receipt information according to the test information; or when the control command is a version submission command, the master control server submitting the current software and hardware versions to a target path according to the control command.

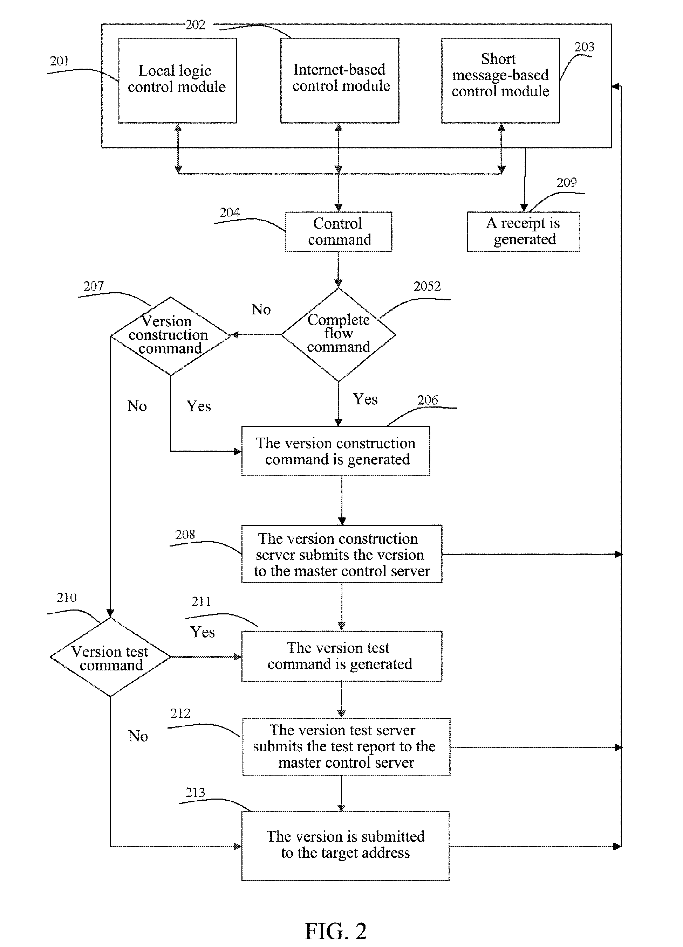

As shown in FIG. 2, it is a flow diagram of the system for automatic construction and automatic test performing services according to the present document, the master control server includes a logic control module, an Internet-based control module and a short message-based control module, the local logic control module is a core control module of the master control server, and both the Internet-based control module and the short message-based control module are dependent on logic control of the logic control module. The process of the system performing services includes the following steps.

In step 201, the logic control module serves as a logic control module running locally for the master control server, it accepts the local version construction and automatic test requests and takes charge of displaying information including log and so on, meanwhile it also accepts the local subscribed configuration operation mode, the user can enable the logic control module to carry out a certain operation at a certain moment by editing configuration files, for example, a certain version is constructed and automatic test is executed at 1 o'clock in the night, and the version is submitted to a certain path after the processing is finished.

In addition, the module also can receive the uploaded data files and take charge of collecting information including the log and so on, meanwhile it also takes charge of establishing a user database, stores the codes and configuration files uploaded by the user, saves the version construction request of the user, and establishes a unique identifier for each version construction request, and the client will access the corresponding data and information through this unique identifier.

In step 202, the Internet-based control module belongs to a server side in a B/S structure, and it receives the request sent by the user with the Browser and performs processing through the local logic control module after parsing the request;

The request includes a version construction request, a version test request and a service request and so on, the service request is such as a secondary development service request.

In step 203, the short message-based control module has a short message transceiving terminal in the master control server, which can receive external short messages while sending the short messages outward. When the user sends a short message to the short message terminal of the master control server, the short message terminal will parse the short message according to the received contents, and perform processing through the local logic control module according to the parsed contents.

In step 204, the local logic control module parses the local request, the request from the Internet and the request from the short message to generate the control command, and the control command is mainly composed of the following four categories: complete flow command, version construction command, version test command and version submission command.

A core compiling interpretation and imaging environment undertakes the responsibility of running a cross-platform visual software installation package, and it contains files required for running a group of minimal sets of software installation packages.

In step 205, it is judged whether the generated control command is the complete flow command, if the control command is the complete flow command, it is to proceed to step 206, and if the control command is not the complete flow command, it is to proceed to step 207.

In step 206, a version construction command which can be assigned is generated according to the control command, and it is to proceed to step 208.

In step 207, it is judged whether the control command is the version construction command, if yes, it is to proceed to step 206, and if not, it is to proceed to step 210.

In step 208, the version construction server accepts the version construction command, coordinates and arranges the version construction process, and returns the version and log information to the master control server at the same time.

In step 209, the master control server accepts the submitted information and generates receipt information; and the flow ends.

The master control server obtains the constructed version from the version construction server and generates the receipt information according to the analysis and the transmitted log information at the same, and it obtains a test report from the version test server and generates the receipt information according to the analysis.

The user can check the situation and result of the master control server processing the user request according to the receipt information.

In step 210, it is judged whether the control command is the version test command, if the control command is the version test command, it is to proceed to step 211, and if the control command is not the version test command, it is to proceed to step 213.

In step 211, a version test command which can be assigned is generated according to the control command, and it is transmitted to the version test server.

In step 212, the version test server accepts the version test command, coordinates and arranges the version test process, and returns the test report and log information to the master control server at the same time; and it is to proceed to step 209.

In step 213, it is determined that the control command is the version submission command, the version received by the master control server in the step 208 is submitted to the related path, and it is to proceed to step 209.

The complete flow command is to execute the whole process from the version construction and automatic test to the version submission. However, the version construction command is only for executing the version construction activity, the version test command is only for executing the automatic version test activity, and the version submission command is only for executing the version submission activity.

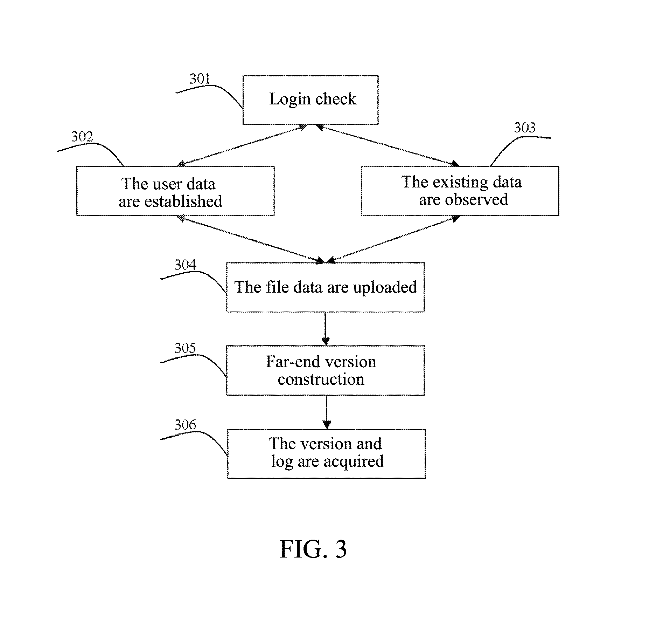

As shown in FIG. 3, it is a flow diagram of the browser-based client performing services in the embodiment of the present document, and the process includes the following steps.

In step 301, login check is performed. With regard to this additional software function and service, for the work of backstage maintenance is involved, the development of all these services are always paid, and the services can only be developed after obtaining the related permission. Therefore, the high-end users and user groups or the secondary developers can acquire the permission for logging in the master control server through the related channels. It can proceed to step 302 or 303 to execute after the logging.

In step 302, if the user logs in for the first time, it can select to establish user data, the related forms are filled through the browser and submitted to the Internet-based control module in the master control server. The Internet-based control module establishes data information of the current user via the logic control module according to the contents submitted by the user.

In step 303, if the user has established the user data before, the related data and the submitted file information and version construction information and so on can be observed in this process.

The files, codes and configuration items related to the construction can be uploaded and deleted in either step 302 or step 303 through the process 304.

In step 304, the file data are uploaded. The user can upload the modified codes, configuration files and resource files to the related user databases of the master control server through this process, and meanwhile the control information including the version construction request and so on and the configuration items also can be uploaded to the master control server.

In step 305, a far-end version construction process is finished. After the user submits the related items required by the version construction, the far-end version construction process can be started, and the master control server will develop a new version construction progress to respond to a far-end version construction command of the user after receiving the version construction request. A new software installation version and log file are eventually generated and stored in the corresponding database of the login user, to be extracted by the user.

In step 306, the version and log are acquired, the final software version and log information will exist in the user database in the server after the process 305 ends. The user can observe the related file information through a data observation interface and download the generated new software version and log.

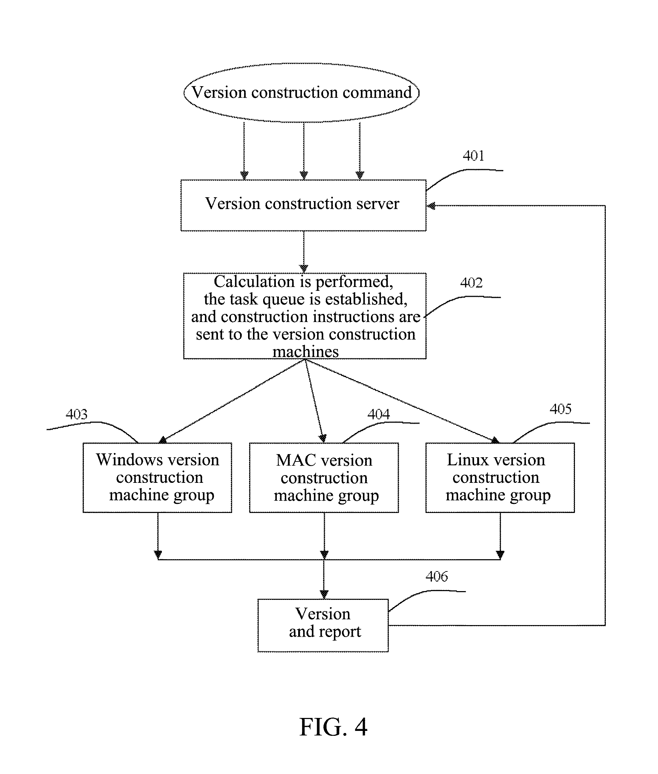

As shown in FIG. 4, it is a flow diagram of the version construction server performing services in the embodiment of the present document, and the process includes the following steps.

In step 401, the master control server transmits the assigned version construction command to the version construction server.

The version construction server can determine a version construction task and all the required external inputs through the version construction command. The version construction server may simultaneously receive multiple version construction instructions, and the version construction server can generate multiple version construction progresses to control the concurrent version construction processes.

In step 402, the version construction server maintains its version construction progress queue after receiving the version construction instructions and coordinates all version construction machines controlled by the version construction server; and after the version construction resources are allocated, the version construction server will send the version construction instructions to the related version construction machines, and the process proceeds to steps 403, 404 and 405 to execute.

When the surplus version construction machine resources are allowed to perform the current version construction task, the version construction server will generate a new version construction progress and allocate the related version construction resources. When the surplus version construction resources are not allowed to perform the current version construction task, the version construction server will add the current version construction task into a waiting queue, and when the version construction resources are released, it will check the waiting tasks in the queue again, and when a satisfying task exists, it will take the task out of the waiting queue, establish the version construction progress and allocate the related resources.

In step 403, a windows version construction machine group constructs windows versions.

In step 404, a mac version construction machine group constructs mac versions.

In step 405, a linux version construction machine group constructs linux versions.

The version construction server selects a specific version construction machine to perform version construction according to a type of the current constructed version and the use condition of the version construction machine of the current type. Each version construction machine has the automatic construction tools and related download and upload tools required by the corresponding version construction.

In step 406, the version construction machine sends the constructed version to the version construction server, and the version construction server decides the subsequent operations.

The subsequent operations generally includes generating three-in-one software packages or two-in-one software packages from multi-platform software versions or directly submitting the software versions to the master control server.

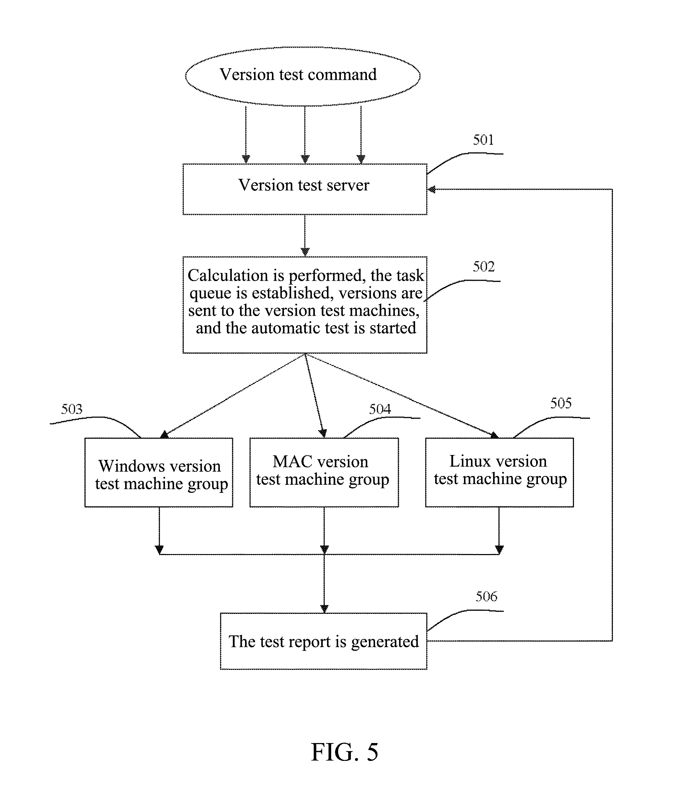

As shown in FIG. 5, it is a flow diagram of the version test server performing services in the embodiment of the present document, and the process includes the following steps.

In step 501, the master control server transmits the assigned version test command to the version test server.

The version test server can determine a version test task and all the required external inputs through the version test command. The version test server may simultaneously receive multiple version test instructions, and the version test server can generate multiple version test progresses to control the concurrent version test processes.

In step 502, the version test server maintains its version test progress queue after receiving the version test instructions, and coordinates all test machines controlled by the version test server; and after the version test resources are allocated, the version test server will send the version test instructions to the related test machines, and the process proceeds to steps 503, 504 and 505 to execute.

When the surplus test machine resources are allowed to perform the current version test task, the version test server will generate a new version test progress and allocate the related resources. When the surplus version test resources are not allowed to perform the current version test task, the version test server will add the current version test task into a waiting queue, and when the version test resources are released, it will check the waiting tasks in the queue again, and when a satisfying task exists, it will take the task out of the waiting queue, establish the version test progress and allocate the related resources.

In step 503, a windows test machine tests a windows version.

In step 504, a mac test machine tests a mac version.

In step 505, a linux test machine tests a linux version.

The version test server selects a specific test machine to perform automatic test according to the current test task. Each test machine has the automatic test tools and related download and upload tools required by the corresponding version test.

In step 506, a test report is generated, the object of the automatic test is to test the quality of the software version, and an important output thereof is the test report. The automatic test tools will generate the test report after finishing the automatic test and upload the test report to the version test server.

It will be beneficial to improve efficiency, shorten the development cycle, and implement all-weather automatic version construction and automatic test service, which effectively guarantees the quality of the constructed version.

The above version construction system and method are beneficial to improve efficiency, shorten the development cycle, and implement all-weather automatic version construction and automatic test service, which effectively guarantees the quality of the constructed version.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present document is not limited to any combination of hardware and software in a specific form.

The above embodiments are only used to describe the technical scheme of the present document, not used to limit the technical scheme of the present document. The present document is just described with reference to the preferred embodiments. The ordinary person skilled in the art should understand that, with regard to the technical scheme of the present document, modifications or equivalent substitutions can be made without departing from the spirit and scope of the technical scheme of the present document, and all these modifications and equivalent substitutions should be covered within the scope of the appended claims of the present document.

### Industrial Applicability

The above version construction system and method are beneficial to improve efficiency, shorten the development cycle, and implement all-weather automatic version construction and automatic test service, which effectively guarantees the quality of the constructed version.

## Claims

1. A version construction system, comprising: a master control server, a version construction server connected to the master control server, and version construction machines connected to the version construction server, wherein:
the master control server is configured to: generate a control command according to an obtained request, correspondingly send the control command to the version construction server, and generate receipt information according to construction information reported by the version construction server, wherein the control command comprises a version construction command;
the version construction server is configured to: send the version construction command or a complete flow command from the master control server to the version construction machines, and report construction information fed back by the version construction machines to the master control server; and
the version construction machines are configured to: construct software and hardware versions according to the version construction command or the complete flow command received from the version construction server, and feed back the construction information to the version construction server.

2. The system according to claim 1, wherein, the control command further comprises a version test command, the system further comprises a version test server connected to the master control server and test machines connected to the version test server; wherein:
the master control server is further configured to: correspondingly send the version test command to the version test server, and generate receipt information according to test information reported by the version test server;
the version test server is configured to: send the version test command from the master control server to the test machines, and report test information fed back by the test machines to the master control server; and
the test machines are configured to: test software and hardware versions according to the version test command received from the version test server, and feed back the test information to the version test server.

3. The system according to claim 2, wherein,
the control command further comprises a complete flow command;
the master control server is further configured to: correspondingly send the complete flow command to the version construction server, and after receiving the construction information reported by the version construction server, send the version test command to the version test server.

4. The system according to claim 1, wherein,
the control command further comprises a version submission command, and the master control server is further configured to: submit current software and hardware versions to a target path according to the version submission command.

5. The system according to claim 1, wherein,
the master control server is configured to: generate the control command according to a request input locally or a received request input through a client or a received request sent through a terminal.

6. The system according to claim 1, wherein,
the version construction machines comprise multi-system version construction machines;
the version construction server is configured to: receive the version construction command sent by the master control server, allocate a version construction machine for the version construction command, and send the version construction command to a corresponding version construction machine.

7. The system according to claim 2, wherein,
the test machines comprise multi-system test machines;
the version test server is configured to: receive the version test command sent by the master control server, allocate a test machine for the version test command, and send the version test command to a corresponding test machine.

8. The system according to any one of claims 1 to 7, wherein,
the master control server comprises: a logic control module, an Internet-based control module and a short message-based control module, wherein:
the Internet-based control module is configured to: receive a user request or a service request input by a user through a client, and parse the user request or the service request to send to the logic control module, wherein, the service request comprises a secondary development service request;
the short message-based control module is configured to: receive a short message sent by the user through a terminal, and parse the short message to send to the logic control module; and
the logic control module is configured to: receive the user request input locally, a parse result sent by the Internet-based control module or a parse result sent by the short message-based control module, and generate the control command in real time or at regular time according to the parse result sent by the Internet-based control module, the parse result sent by the short message-based control module or the user request input locally.

9. The system according to claim 8, wherein,
the logic control module is further configured to: allocate an identifier to the user request or the service request, and correspondingly save files uploaded by the user or the receipt information generated by the master control server according to the identifier.

10. A version construction method, comprising:
a master control server generating a control command according to an input request; and
when the control command is a version construction command, the master control server sending the control command to a version construction server, receiving construction information reported by the version construction server according to the control command, and generating receipt information according to the construction information.

11. The method according to claim 10, further comprising:
when the control command is a version test command, the master control server sending the control command to a version test server, receiving test information reported by the version test server according to the control command, and generating receipt information according to the test information; or
when the control command is a complete flow command, the master control server sending the control command to the version construction server, and after receiving construction information reported by the version construction server according to the control command, sending the control command to the version test server, receiving test information reported by the version test server according to the control command, and generating receipt information according to the test information; or
when the control command is a version submission command, the master control server submitting current software and hardware versions to a target path according to the control command.

12. The method according to claim 10 or 11, wherein,
the master control server generating a control command according to an input request comprises:
the master control server generating the control command according to a user request input locally or input remotely; or the master control server generating the control command according to a service request input remotely, wherein the service request comprises a secondary development service request.
